# EUROPÄISCHE PATENTANMELDUNG

(11) **EP 0 591 915 A2**
(43) Veröffentlichungstag der Anmeldung: **13.04.1994**
(21) Anmeldenummer: 93116064.2
(22) Anmeldetag: 05.10.1993
(51) Int. Cl.: H02H 9/00

(54) **Vorrichtung zur Einschaltstrombegrenzung an Schaltnetzteilen**

(30) Priorität: 06.10.1992 DE 4233616
(71) Anmelder: Gossen- Metrawatt GmbH, D-8500 Nürnberg (DE)
(72) Erfinder: Hofmann, Hans-Georg, D-91413 Neustadt/Aisch (DE)
(74) Vertreter: Hafner, Dieter, Dr.rer.nat., Dipl.-Phys.

(57) **Zusammenfassung**

Die Erfindung betrifft eine Vorrichtung zur Einschaltstrombegrenzung an Schaltnetzteilen mit einem Eingang (2), an welchem Spannungen unterschiedlicher Werte anlegbar sind und einem Ausgang (3), an welchem weitere Schaltkomponenten des Schaltnetzteiles anschließbar sind und über welchen ein Ladekondensator (4) gelegt ist, einem Ladestrompfad (5) zur Aufladung eines Ladekondensators (4), in welchem ein Ladewiderstand angeordnet ist, sowie einem zum Ladestrompfad parallelverlaufenden weiteren Strompfad mit einem Schalter zur Überbrückung des Ladewiderstandes, wobei der Ladewiderstand als Kaltleiter (PTC 10) ausgebildet ist.

## Beschreibung

Die Erfindung betrifft eine Vorrichtung zur Einschaltstrombegrenzung an Schaltnetzteilen mit den Merkmalen des Oberbegriffes des Patentanspruches 1.

### Stand der Technik:

Es ist bekannt, zur Einschaltstrombegrenzung bei elektrischen Geräten Heißleiter zu verwenden. Werden diese an geeigneter Stelle im Eingangsbereich von Netzteilen angeordnet, sorgt ihre temperaturabhängige Widerstandscharakteristik zunächst für ein langsames Ansteigen des Stromes, da Heißleiter im kalten Zustand höherohmig sind als im heißen Betriebszustand. Dadurch wird der Einschaltstrom auf relativ niedrige Werte begrenzt. Durch den durch den Heißleiter fließenden Strom erhöht sich die Temperatur des Heißleiters, er bleibt mithin im eingeschalteten Zustand niederohmig.

Die Verwendung von Heißleitern zur Einschaltstrombegrenzung ist jedoch in mehrerer Hinsicht nachteilig. Zunächst beschränkt sich ihre Verwendung aufgrund des eingeschränkten Widerstandsverhältnisses von Heißleitern zwischen Warm- und Kaltwiderstand auf den Netzspannungsbereich von 110 bis 220 V auf der Eingangsseite der Vorrichtung. Soll das Schaltnetzteil aber über sehr weite Spannungsbereiche eingesetzt werden, sind Heißleiter ungeeignet, da je nach ihrer Dimensionierung entweder bei kleinen Spannungen der Verlust an den Heißleitern im eingeschalteten Zustand zu groß wird oder bei hohen Spannungen der Einschaltstrom zu groß ist.

Eine weitere Einschränkung für den Einsatz von Heißleitern besteht ferner darin, daß ein Heißleiter seine strombegrenzende Funktion nur im kalten Zustand erfüllen kann. Treten beispielsweise kurzzeitige Netzspannungsunterbrechungen auf, dann wirkt beim Wiedereinschalten nur der niedrige Warmwiderstand des Heißleiters, so daß der Einschaltstrom zu hoch ist.

Weiterhin ist es bekannt, den Ladekondensator über dem Ausgang einer derartigen Vorrichtung über einen Vorwiderstand aufzuladen und den Vorwiderstand anschließend mit einem Schalter zu überbrücken. Mit einer derartigen Anordnung läßt sich zum einen eine sichere Strombegrenzung beim Einschalten eines Netzteiles erreichen, im eingeschalteten Zustand hat das Netzteil darüber hinaus niedrige Verluste.

### Aufgabenstellung:

Der Erfindung liegt die Aufgabe zugrunde, einen Vorrichtung mit den Merkmalen des Anspruches 1 derart auszubilden, daß sie in Weitbereichsnetzteilen zuverlässig einsetzbar ist und auch bei wiederholten Ein-Ausschaltvorgängen in kurzen Abständen Störungen vermieden werden. Diese Aufgabe wird nach der Erfindung dadurch gelöst, daß der Widerstand im Ladestromkreis ein Kaltleiter ist. Die Verwendung eines Kaltleiters an entsprechender Stelle gewährleistet, daß bei wiederholtem Ein- und Ausschalten des Gerätes in kurzen Abständen nacheinander der Kaltleiter nicht durch die dabei entstehende Verlustleistung zerstört werden kann, da er sich selbst durch seine Charakteristik schützt.

Vorteilhafte Weiterbildungen der Erfindung ergeben sich aus den Unteransprüchen 2 - 5.

Anspruch 2 lehrt den Überbrückungsschalter als Überbrückungstransistor auszubilden. Vorteilhafterweise bietet sich dabei ein Feldeffekttransistor an.

Vorteilhaft ist auch, daß durch die Kombination einer Strom- und Spannungsansteuerung des Überbrückungstransistors ein Schutz vor kurzzeitigen energiereichen Spannungsspitzen dadurch erreicht wird, daß zuerst die Strombegrenzung anspricht, wodurch die Drain-Source-Spannung des Feldeffekttransistors ansteigt, die für eine Sperrung des Überbrückungstransistors sorgt. Sobald die Überspannung wieder unter einen vorgegebenen Grenzwert abfällt, schaltet der Feldeffekttransistor wieder durch.

Die Erfindung ist anhand eines Ausführungsbeispieles in den Zeichnungen näher erläutert. Diese zeigen:

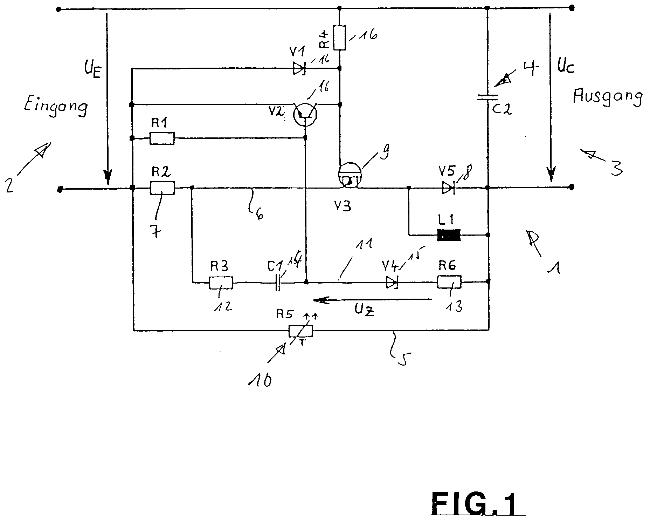

- Fig. 1: eine Vorrichtung zur Einschaltstrombegrenzung an Schaltnetzteilen;

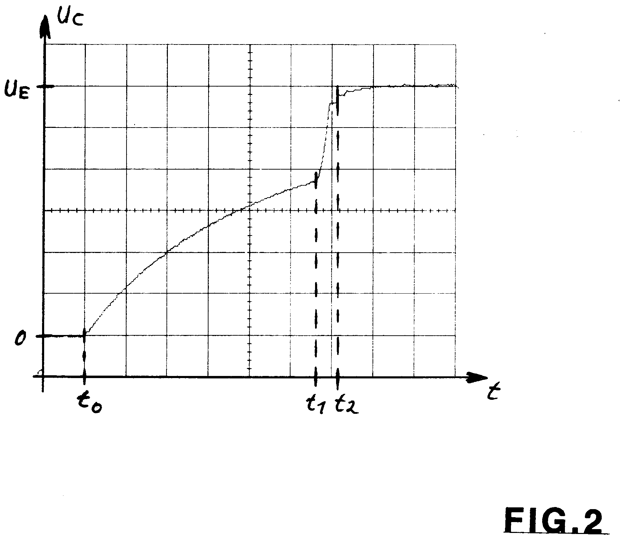

- Fig. 2: ein Zeit-Spannungsdiagramm zur Darstellung des Spannungsverlaufes am Ladekondensator beim Einschaltvorgang.

Die insgesamt mit 1 bezeichnete Vorrichtung wird zur Begrenzung des Einschaltstromes an Weitbereichsschaltnetzteilen verwendet. Sie weist einen Eingang 2 und einen Ausgang 3 auf. Am Eingang 2 können Spannungen unterschiedlicher Werte angelegt werden, am Ausgang 3 sind weitere Schaltkomponenten des Schaltnetzteils anschließbar. Über dem Ausgang 3 liegt ein Ladekondensator 4, der über einen Ladestrompfad 5, in dem ein Widerstand angeordnet ist, aufgeladen wird. Parallel zum Ladestrompfad 5 verläuft ein weiterer Strompfad 6 in welchem zunächst ein Widerstand 7, eine Diode 8 , eine Induktivität 21 und sodann ein elektrischer Schalter, nämlich ein Feldeffekttransistor 9 angeordnet ist. Über den Feldeffekttransistor 9 kann der Widerstand im Ladestromkreis 5 überbrückt werden.

Der Widerstand im Ladestrompfad 5 ist ein Kaltleiter 10, d. h. ein Widerstand mit einem positiven Temperaturkoeffizienten, der im kalten Zustand leitet und im warmen Zustand hochohmig wird.

Parallel zum Ladestrompfad 5 ist noch ein dritter Strompfad 11 vorgesehen, in dem neben Widerständen 12, 13 ein Kondensator 14 und eine Zenerdiode 15 angeordnet sind.

Die Funktion der Schaltung stellt sich wie folgt dar:
Unmittelbar nach Anlegen der Einschaltspannung UE zu einem Zeitpunkt t₀ der Überbrückungstransistor (FET 9) über den Spannungspfad bestehend aus den Widerständen 13 die Zenerdiode 15 und einem Transistor 16 gesperrt. Der Ladekondensator 4 wird bis zum Zeitpunkt t₁ über den Kaltleiter 10 aufgeladen.

Im Zeitpunkt t₁ ist die Differenz aus Eingangsspannung UE und Kondensatorspannung U_{C} über dem Ladekondensator 4 gleich der Zenerspannung U_{Z} der Zenerdiode 15.

Ab dem Zeitpunkt t₁ unterscheidet die Spannungsdifferenz aus Eingangsspannung U_{E} und Kondensatorspannung U_{C} die Zenerspannung U_{Z} der Zenerdiode 15. Im dritten Strompfad 11, der den Widerstand 13 und die Zenerdiode 15 beinhaltet, kann kein Strom mehr fließen. Folglich wird der Transistor 16 (V2) sperren und der Feldeffekt-Transistor 9 leiten.

Der Strom im Strompfad 6 steigt nun bis zum Ansprechen der Stromregelung bestehend aus den Widerständen 7 und 12 sowie dem Kondensator 14 und dem Transistor 16 an. Bis zum Zeitpunkt t₂ wird der Ladekondensator 4 (C₂) nun annähernd mit Konstantstrom geladen.

Im Zeitpunkt t₂ ist der Ladekondensator 4 (C₂) nun vollständig geladen und der Ladevorgang damit abgeschlossen.

Treten sprungförmige Überspannungen der Eingangsspannung U_{E} auf, dann wird der Feldeffekt-Transistor 9 unmittelbar wie beim Einschaltvorgang über den Spannungspfad des Widerstandes 13, der Zenerdiode und den Transistor 16 gesperrt. Die Überspannung wird damit vom Ausgang ferngehalten. Es kommt lediglich über die Zeitkonstante des Kaltleiters 10 (R₅) und den Ladekondensator 4 (C₂) zu einem minimalen Spannungsanstieg am Ladekondensator 4 (C₂). Die Zeitkonstante ist bei kleinen Netzteilen groß im Vergleich zu der Halbwertzeit der Überspannungsimpulse.

Nach Abklingen des Überspannungsimpulses liefert der Spannungspfad 11 mit dem Widerstand 13 und der Zenerdiode 15 keinen Basisstrom mehr für den Transistor 16 (V₂), dieser sperrt, wodurch der Feldeffekt-Transistor 9 (V₃) wieder leitet.

Die Funktion einzelner Bauteile stellt sich wie folgt dar:
Über den Transistor 16 (V₂) wird die Gatespannung für den Feldeffekt-Transistor 9 gewonnen. Die Zenerdiode V₁ begrenzt diese auf einen oberen Grenzwert. Der Widerstand R₁ dient der Reststromableitung vom Transistor 16 (V₂).

Der Widerstand 12 und der Transistor 14 leiten den Spannungsabfall ab Stromfühlerwiderstand 7 an die Basis des Transistors 16 (V₂). Die Induktivität L₁ begrenzt die Stromanstiegsgeschwindigkeit im Strompfad 6. Dies ist empfehlenswert, damit wegen der endlichen Schaltgeschwindigkeit der Halbleiter keine unzulässig hohen Stromspitzen entstehen. Die Diode 8 dient als Freilaufdiode für die Induktivität L₁, der Widerstand 13 (R₆) begrenzt den Basisstrom für den Transistor 16 (V₂).

## Patentansprüche

1. Vorrichtung zur Einschaltstrombegrenzung an Schaltnetzteilen mit
- einem Eingang, an welchem Spannungen unterschiedlicher Werte anlegbar sind,
- einem Ausgang, an welchem weitere Schaltkomponenten des Schaltnetzteiles anschließbar sind und über welchen ein Ladekondensator gelegt ist,
- einem Ladestrompfad zur Aufladung des Ladekondensators, in welchem ein Ladewiderstand angeordnet ist, sowie
- einem zum Ladestrompfad parallelverlaufenden weiteren Strompfad mit einem Schalter zur Überbrückung des Ladewiderstandes,
dadurch gekennzeichnet,
daß der Ladewiderstand als Kaltleiter (PTC 10) ausgebildet ist.

2. Vorrichtung nach Anspruch 1,
dadurch gekennzeichnet,
daß der Schalter ein Überbrückungstransistor (FET 9) ist.

3. Vorrichtung nach Anspruch 2,
dadurch gekennzeichnet,
daß der Überbrückungstransistor als Feldeffekttransistor (9) ausgebildet ist.

4. Vorrichtung nach Anspruch 3,
dadurch gekennzeichnet,
daß die den Überbrückungstransistor (FET 9) sperrende Steuerspannung nach Ansprechen der Strombegrenzungsschaltung sinkt.

5. Vorrichtung nach einem der vorhergehenden Ansprüche,
dadurch gekennzeichnet,
daß parallel zum Ladestrompfad (5) ein dritter Strompfad (11) mit einem Widerstand (13) und einer Zenerdiode (15) angeordnet ist, an dem die Basis eines Transistors (16) angeschlossen ist, der den Feldeffekttransistor (9) (V3) steuert.
